# EUROPÄISCHE PATENTSCHRIFT

(11) **EP 2 297 436 B1**
(45) Veröffentlichungstag und Bekanntmachung des Hinweises auf die Patenterteilung: **20.11.2013**
(21) Anmeldenummer: 09757169.9
(22) Anmeldetag: 16.05.2009
(51) Int. Cl.: F01N 3/20, F01N 13/02, F01N 3/10

(54) **SCR-KATALYSATOR MIT HOHEM WIRKUNGSGRAD**
HIGH-EFFICIENCY SCR CATALYTIC CONVERTER
CATALYSEUR POUR RÉDUCTION CATALYTIQUE SÉLECTIVE À RENDEMENT ÉLEVÉ

(30) Priorität: 30.05.2008 DE 102008026178
(43) Veröffentlichungstag der Anmeldung: 23.03.2011
(73) Patentinhaber: DEUTZ Aktiengesellschaft, 51149 Köln (DE)
(72) Erfinder: KNUTH, Hans-Walter, 51145 Köln (DE)
(86) Internationale Anmeldenummer: PCT/EP2009/003500
(87) Internationale Veröffentlichungsnummer: WO 2009/146786

(56) Entgegenhaltungen:
- EP-A- 0 924 400
- EP-A- 1 882 832
- DE-A1-102004 031 624

## Beschreibung

Die Erfindung betrifft ein Verfahren zur selektiven Reinigung des Abgases einer Brennkraftmaschine unter Anwendung eines SCR-Katalysators, bei dem dosiert ein Reduktionsmittel dem Abgas vor dem Eintritt in den SCR-Katalysator zugesetzt wird, sowie eine Vorrichtung zur Durchführung des Verfahrens.

Ein derartiges Verfahren und eine entsprechende Vorrichtung sind aus der DE 10 2004 031 624 A1 bekannt. Speziell wird mit diesem Verfahren und dieser Vorrichtung eine Steuerung oder Regelung des Reagenzmittel-Füllstandes im Katalysator auf einen vorgegebenen Speicher-Sollwert ermöglicht. Die gezielte Vorgabe des Speicher-Sollwertes stellt einerseits sicher, dass in instationären Zuständen der Brennkraftmaschine eine ausrelchende Menge an Reagenzmitteln zur möglichst vollständigen Beseitigung wenigstens einer unerwünschten Abgaskomponente zur Verfügung steht und dass andererseits ein Reagenzmittelschlupf vermieden wird.

Weiter ist in der EP 1882832 eine Anordnung zur Verminderung von Stickoxiden im Abgas von Brennkraftmaschinen mit Hilfe von Ammoniak und/ oder ammoniakabspaltenden Reduktionsmitteln beschrieben, wobei Ammoniak und/oder ammoniakhaltige Reduktionsmittel vor einer Katalysatorkombination aus einem SCR-Katalysator und einem nachgeordneten NH 3 -Oxidationskatalysator dem Abgasstrom beigegeben werden, derart, dass vor dem SCR-Katalysator ein homogenes Gemisch aus Abgas und Ammoniak vorliegt. Zur Optimierung des Umsatzes von Stickoxiden ist vorgesehen, stromab der Kombination aus einem ersten SCR-Katalysator und einem ersten NH 3 -Oxidationskatalysator wenigstens einen zweiten Katalysator mit SCR-Aktivität nachzuschalten und so die am ersten NH 3 -Oxidationskatalysator durch mangelnde Selektivität des Katalysators gebildeten Stickoxide mit noch nicht oxidiertem NH 3 zu Stickstoff zu reduzieren.

Der Erfindung liegt die Aufgabe zugrunde, ein Verfahren und eine Vorrichtung anzugeben beziehungsweise zur Verfügung zu stellen, mit denen ein besonders hoher Wirkungsgrad der Entstickung erreicht werden kann.

Diese Aufgabe wird dadurch gelöst, dass eine Überdosis des Reduktionsmittels dem Abgas zugesetzt wird und das Abgas nach dem Austritt aus dem SCR-Katalysator (SCR = Selective Catalytic Reduction) teilweise durch einen Oxidationskatalysator und teilweise über einen den Oxidationskatalysator umgehenden Bypass einem zweiten SCR-Katalysator zugeführt wird. Die entsprechende Vorrichtung zeichnet sich dadurch aus, dass stromabwärts des SCR-Katalysators ein Oxidationskatalysator und ein den Oxidationskatalysator umgehender Bypass vorhanden ist und an diesem ein zweiter SCR-Katalysator anschließt. Nachdem das Abgas, in dem fast kein NOₓ mehr enthalten ist, sondern nur NH₃, den SCR-Katalysator verlässt, wird etwa die Hälfte des Abgases über einen Oxydationskatalysator geleitet und dort wird das NH₃ in NOₓ aufoxidiert. Die verbleibende Hälfte des Abgases wird über einen Bypass geleitet (NH₃ bleibt unverändert). Danach werden die beiden Abgasströme wieder zusammengeführt (ca. 50% NOₓ und ca. 50% NH₃). Dieser Abgasstrom wird dem zweiten SCR-Katalysator zugeführt und es reagieren NH₃ und NOₓ miteinander weitgehend vollständig zu Stickstoff und Wasser (NO + NO₂ + 2NH₃ --> 2N₂ + 3H₂O).

Mit diesem System ist also ein sehr hoher Wirkungsgrad der Entstickung möglich.

Dabei ist der regelungstechnische Aufwand der Dosierung des Reduktionsmittels wesentlich geringer als mit herkömmlichen SCR-Systemen, weil lediglich eine gewisse Überdosierung des Reduktionsmittels vor dem ersten SCR-Katalysator sichergestellt sein muss. Die genaue Höhe der Überdosierung ist aber nicht so wichtig, weil das Reduktionsmittel in der Nachschaltanordnung der Komponenten im Prinzip immer genau zu 100 % in unschädlichen Stickstoff umgewandelt wird. Bei dieser nachgeschalteten Anordnung ist im Übrigen keine Regelung mehr nötig, die Funktion ergibt sich allein durch die Komponenten selber.

Damit das Abgas genau zu 50 % über den Oxidationskatalysator strömt, könnte in den Bypass ebenfalls ein Katalysatorsubstrat, allerdings ohne aktive Katalysatorbeschichtung, eingebaut werden. Alternativ kann die Strömung im Bypass auch auf andere Weise gedrosselt werden.

Das Erreichen der gleichen Funktion ist auch mit einer anderen Anordnung der Komponenten möglich. Der Oxidationskatalysator ist in einem Teil von Segmenten katalytisch beschichtet und in anderen Segmenten nicht beschichtet (dieser Teil fungiert dann als Bypass). Dahinter folgt dann ein Mischer, zum Beispiel in Form eines Metall- oder Keramik-Schaums. Vorteil dieser Ausgestaltung ist, dass alle Komponenten mit einem einheitlichen Durchmesser gefertigt werden können und demzufolge in ein gemeinsames Gehäuse integriert werden können.

Je feiner die katalytisch beschichteten Segmente und nicht beschichteten Segmente strukturiert werden, desto weniger Aufwand ist bei dem anschließenden Mischer nötig. Dabei liegt die feinste denkbare Strukturierung dann vor, wenn die Kanäle des Monolithen, der den Oxidationskatalysator bildet, jeweils abwechselnd beschichtet und nicht beschichtet sind. In diesem Fall kann auf den nachgeschalteten Mischer komplett verzichtet werden. Ein kleiner Spalt zwischen dem Oxidationskatalysator und dem zweiten SCR-Katalysator wird dann für die Mischung ausreichend sein.

Da der NOₓ-Umsatz am zweiten SCR-Katalysator wesentlich geringer ist als an dem ersten SCR-Katalysator, wird man mit einem deutlich geringeren Volumen auskommen. Da auch die Volumina von Oxidationskatalysator und Mischer relativ gering gehalten werden können, kann das Volumen des beschriebenen Gesamtsystems in einem vertretbaren Maß gehalten werden.

Bei der Fein-Optimierung des beschriebenen Systems könnte sich herausstellen, dass aufgrund von weiteren bisher nicht dargestellten chemischen Reaktionen und aufgrund von unvollständigen Reaktionen eine Strömungsteilung von nicht genau 50 %, sondern ein anderer Wert optimal ist, um sowohl NOₓ-Emissionen, als auch Ammoniakschlupf zu minimieren. Ein solcher von 50 % abweichender Strömungstellungswert ist ebenfalls Gegenstand der beschriebenen Erfindung. Eine konkurrierende Reaktion zur Oxidation des NH₃ zu NOₓ ist zum Beispiel die Oxidation des NH₃ zu Stickstoff (N₂). Dieses ist die Reaktion, die vorzugsweise an einem Sperrkatalysator ablaufen soll. Ein Sperrkatalysator ist in seiner Oxidationswirkung gebremst und oxidiert daher das NH₃ vorzugsweise zu N₂. Der im hier beschriebenen System verwendete Oxidationskatalysator, darf In seiner Oxidationswirkung nicht gebremst sein, sondern muss eine besonders hohe Oxidationswirkung aufweisen, um möglichst sämtliches NH₃, das durch den Oxidationskatalysator strömt, zu NOₓ oxidieren. Je vollständiger diese Reaktion ist, desto besser funktioniert das beschriebene Verfahren. Bei nicht idealen Reaktionsabläufen (zum Beispiel Entstehung eines gewissen Anteils von N₂ bei der NH₃-Oxidation) kann es nötig sein, einen von 50 % abweichenden Strömungsteilungswert zu verwenden, um einen optimalen Gesamtwirkungsgrad zu erreichen.

Bei Erreichen einer 100%igen NOₓ-Reduktion mit einer Überdosierung von 20 % im ersten SCR-Katalysator und einem Wirkungsgrad von 80 % im zweiten SCR-Katalysator errechnet sich ein Gesamtwirkungsgrad von 96 %. Bei einer Überdosierung von 10 % und 90 % Wirkungsgrad in der zweiten SCR-Stufe errechnet sich ein solcher von 99 %.

Ein SCR-Katalysator-System mit derart hohem Wirkungsgrad gibt dem Motorenentwickler erhebliche Freiheiten bei der Realisierung von anspruchsvollen Emissionsanforderungen wie zum Beispiel Euro VI für Nutzfahrzeugmotoren und Tier IV für Industriemotoren, weil das Erreichen der niedrigen NOₓ-Grenzwerte allein mit dem Katalysator möglich ist und dann der Motor nach anderen Kriterien wie zum Beispiel Verbrauch und Rußemission wesentlich effektiver optimiert werden kann. Ein verbrauchsoptimaler Motor würde die Kraftstoff-Ressourcen schonen und den TreibhausEffekt mindern.

Bei dynamischem Brennkraftmaschinenbetrieb, bei dem sich die NOₓ-Konzentrationen vor dem SCR-Katalysator und (sicherlich) auch die NH₃-Konzentrationen nach dem ersten SCR-Katalysator schnell verändern, ist es wichtig, dass die Aufenthaltszeiten der Reaktanden im Oxidationskatalysator und im Bypass möglichst gleich sind, damit zu jedem Zeitpunkt ungefähr die korrekte 50/50-Teilung erhalten bleibt. Da für die Aufenthaltszeiten Strömungs-, Adsorptions- und Speichereffekte eine Rolle spielen, muss das Ausmaß aller dieser drei Effekte im Oxidationskatalysator und im Bypass möglichst gleich sein. Zu diesem Zweck ist das Bypassmaterial mit dem gleichen Washcoat zu versehen wie der Oxidationskatalysator, der einzige Unterschied ist die fehlende Edelmetallbeschichtung im BypassMaterial.

Der erste SCR-Katalysator sollte eine möglichst geringe NH₃-Speicherfähigkeit haben, damit auch bei dynamischem Motorbetrieb jederzeit ein genügender Ammoniakschlupf realisierbar ist.

Weitere vorteilhafte Ausgestaltungen sind der folgenden Zeichnungsbeschreibung zu entnehmen, in der in den Figuren dargestellte Ausführungsbeispiele der Erfindung näher beschrieben sind. Es zeigen:
- Fig. 1: eine schematische Ansicht der Anordnung der einzelnen Komponenten,
- Fig. 2: eine erste Ausgestaltung der zusammengefassten Komponenten und
- Fig. 3: eine zweite Ausgestaltung der zusammengefassten Komponenten.

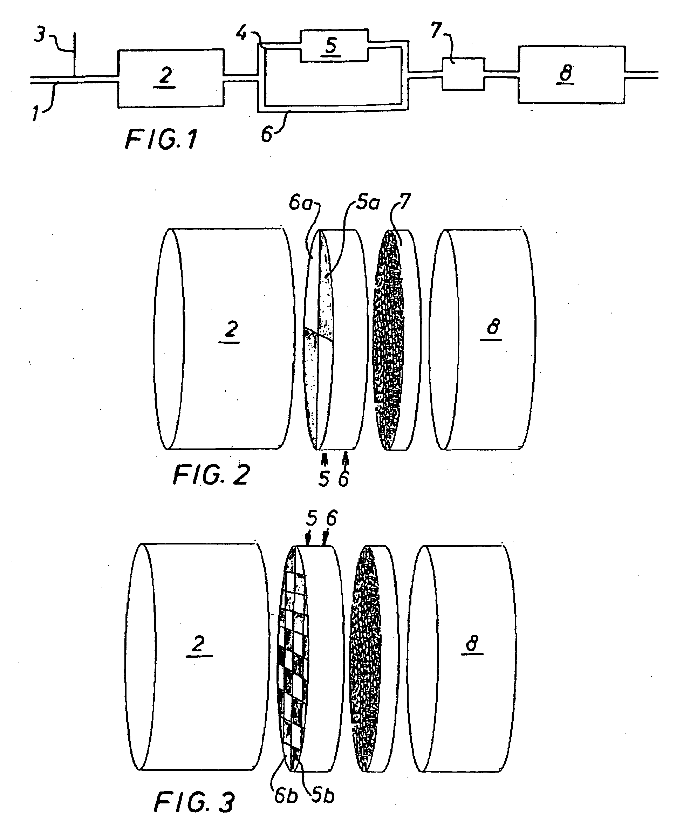

Das Abgas einer insbesondere selbstzündenden Brennkraftmaschine wird über eine erste Abgasleitung 1 einem ersten SCR-Katalysator 2 zugeführt, wobei in die erste Abgasleitung 1 über eine geeignete Einspeiseleitung 3 Reduktionsmittel dosiert zugeführt wird. Das Abgas durchströmt den ersten SCR-Katalysator 2 und gelangt über eine weitere Abgasleitung 4 zu einem Oxidationskatalysator 5. Zu dem Oxidationskatalysator 5 existiert ein Bypass 6, der wie zu den Figuren 2 und 3 beschrieben ausgebildet sein kann oder aber auch grundsätzlich eine Umgehungsleitung sein kann, in die ein nicht dargestelltes Drosselventil bzw. Absperrventil eingesetzt ist. Damit lässt sich die durch den Oxidationskatalysator 5 und die Umgehungsleitung geführte Abgasmenge einstellen. Stromabwärts des Oxidationskatalysators 5 werden die Abgasströme wieder zusammengeführt und einem Mischer 7 zugeführt. In dem Mischer 7 werden die Abgasströme miteinander vermischt und im Anschluss an den Mischer 7 einem zweiten SCR-Katalysator 8 zugeführt. Von diesem wird das gereinigte Abgas in die Umgebung abgeführt.

Die Fig. 2 zeigt eine erste Ausgestaltung der zusammengefassten wesentlichen Komponenten. Hierbei sind der erste SCR-Katalysator 2 mit dem Oxidationskatalysator 5, dem Bypass 6, dem Mischer 7 und dem zweiten SCR-Katalysator 8 grundsätzlich zu einer einzigen zylinderförmigen Baueinheit zusammengefasst und nur in der Zeichnung - um die einzelnen Komponenten darstellen zu können - in die einzelnen Komponenten aufgeteilt dargestellt. Hierbei ist der Oxidationskatalysator 5 in einem Teil von Segmenten 5a katalytisch beschichtet und in dem anderen Teil von Segmenten 6a nicht beschichtet. Entsprechend wirken die beschichteten Segmente 5a als Oxidationskatalysator 5 und die nicht beschichteten Segmente als Bypass 6. Der Mischer 7 ist als eine Scheibe eines Metall- oder Keramikschaums dargestellt.

Im Unterschied dazu sind in dem Ausführungsbeispiel gemäß Fig. 3 die katalytisch beschichteten Segmente 5a und nicht beschichteten Segmente 6b feiner strukturiert. Dies hat den Vorteil, dass an die Ausgestaltung des Mischers 7 weniger Anforderungen gestellt werden. Gegebenenfalls kann der Mischer 7 sogar entfallen.

### Bezugszeichen

- 1: Abgasleitung
- 2: erster SCR-Katalysator
- 3: Einspeiseleitung
- 4: Abgasleitung
- 5: Oxidationskatalysator
- 6: Bypass
- 7: Mischer
- 8: zweiter SCR-Katalysator

## Patentansprüche

1. Verfahren zur selektiven Reinigung des Abgases einer Brennkraftmaschine unter Anwendung eines SCR-Katalysators, bei dem dosiert ein Reduktionsmittel dem Abgas vor dem Eintritt in den SCR-Katalysator zugesetzt wird, wobei eine Überdosis des Reduktionsmittels dem Abgas zugesetzt wird und das Abgas nach dem Austritt aus dem SCR-Katalysator (2) teilweise durch einen Oxidationskatalysator (5) und teilweise über einen den Oxidationskatalysator (5) umgehenden Bypass (6) einem zweiten SCR-Katalysator (8) zugeführt wird.

2. Verfahren nach Anspruch 1,
**dadurch gekennzeichnet, dass** ein angenähert hälftiger Strömungsfluss durch den Oxidationskatalysator (5) und den Bypass (6) eingestellt wird.

3. Verfahren nach einem der Ansprüche 1 oder 2,
**dadurch gekennzeichnet, dass** das Abgas vor dem Eintritt in den zweiten SCR-Katalysator (8) durch einen Mischer (7) geleitet wird.

4. Vorrichtung zur selektiven Reinigung des Abgases einer Brennkraftmaschine unter Anwendung eines SCR-Katalysators, in dem dosiert ein Reduktionsmittel dem Abgas vor dem Eintritt in den SCR-Katalysator zugesetzt wird, **dadurch gekennzeichnet, dass** stromabwärts des SCR-Katalysators (2) ein Oxidationskatalysator (5) und ein den Oxidationskatalysator (5) umgehender Bypass (6) vorhanden ist und sich an diese ein zweiter SCR-Katalysator (8) anschließt.

5. Vorrichtung nach Anspruch 4,
**dadurch gekennzeichnet, dass** dem zweiten SCR-Katalysator (8) ein Mischer (7) vorgeschaltet ist.

6. Vorrichtung nach Anspruch 5,
**dadurch gekennzeichnet, dass** der SCR-Katalysator (2), der Oxidationskatalysator (5), der Bypass (6), der Mischer (7) und der zweite SCR-Katalysator (8) eine bauliche Einheit bilden.

7. Vorrichtung nach Anspruch 6,
**dadurch gekennzeichnet, dass** die bauliche Einheit ein zylinderförmiger Körper mit einem konstanten Durchmesser ist.

8. Vorrichtung nach Anspruch 6 oder 7,
**dadurch gekennzeichnet, dass** der Oxidationskatalysator (5) aus katalytisch wirksamen Segmenten (5a) und katalytisch unwirksamen Segmenten (6a) gebildet ist.

## Claims

1. Method for the selective purification of the exhaust gas of an internal combustion engine using an SCR catalytic converter, wherein a reducing agent is added in a dosed manner to the exhaust gas before the latter enters the SCR catalytic converter, wherein an overdose of the reducing agent is added to the exhaust gas, and the exhaust gas, after it exits the SCR catalytic converter (2), is supplied partially through an oxidation catalytic converter (5), and partially via a bypass (6) which bypasses the oxidation catalytic converter (5), to a second SCR catalytic converter (8).

2. Method according to Claim 1,
**characterized in that** a flow configuration is set in which approximately equal proportions pass through the oxidation catalytic converter (5) and through the bypass (6).

3. Method according to either of Claims 1 and 2,
**characterized in that** the exhaust gas, before entering the second SCR catalytic converter (8), is conducted through a mixer (7).

4. Device for the selective purification of the exhaust gas of an internal combustion engine using an SCR catalytic converter, wherein a reducing agent is added in a dosed manner to the exhaust gas before the latter enters the SCR catalytic converter, **characterized in that**, downstream of the SCR catalytic converter (2), there is provided an oxidation catalytic converter (5) and a bypass (6) which bypasses the oxidation catalytic converter (5), and these are adjoined by a second SCR catalytic converter (8).

5. Device according to Claim 4,
**characterized in that** a mixer (7) is positioned upstream of the second SCR catalytic converter (8).

6. Device according to Claim 5,
**characterized in that** the SCR catalytic converter (2), the oxidation catalytic converter (5), the bypass (6), the mixer (7) and the second SCR catalytic converter (8) form a structural unit.

7. Device according to Claim 6,
**characterized in that** the structural unit is a cylindrical body with a constant diameter.

8. Device according to Claim 6 or 7,
**characterized in that** the oxidation catalytic converter (5) is formed from catalytically active segments (5a) and catalytically inactive segments (6a).

## Revendications

1. Procédé de purification sélective des gaz d'échappement d'un moteur à combustion interne en utilisant un catalyseur RCS, dans lequel un réducteur est ajouté sous forme dosée aux gaz d'échappement avant leur entrée dans le catalyseur RCS, un surdosage de réducteur étant ajouté aux gaz d'échappement et les gaz d'échappement, après leur sortie hors du catalyseur RCS (2), étant acheminés en partie par un catalyseur d'oxydation (5) et en partie par le biais d'une dérivation (6) contournant le catalyseur d'oxydation (5) à un deuxième catalyseur RCS (8).

2. Procédé selon la revendication 1,
**caractérisé en ce qu'**approximativement un demi-flux d'écoulement est ajusté à travers le catalyseur d'oxydation (5) et la dérivation (6).

3. Procédé selon l'une quelconque des revendications 1 ou 2,
**caractérisé en ce que** les gaz d'échappement sont guidés avant leur entrée dans le deuxième catalyseur RCS (8) à travers un mélangeur (7).

4. Dispositif pour la purification sélective des gaz d'échappement d'un moteur à combustion interne en utilisant un catalyseur RCS, dans lequel un réducteur est ajouté sous forme dosée au gaz d'échappement avant son entrée dans le catalyseur RCS, **caractérisé en ce qu'**en aval du catalyseur RCS (2) est prévu un catalyseur d'oxydation (5) et une dérivation (6) contournant le catalyseur d'oxydation (5), et un deuxième catalyseur RCS (8) se raccorde à ladite dérivation.

5. Dispositif selon la revendication 4,
**caractérisé en ce qu'**un mélangeur (7) est monté en amont du deuxième catalyseur RCS (8).

6. Dispositif selon la revendication 5,
**caractérisé en ce que** le catalyseur RCS (2), le catalyseur d'oxydation (5), la dérivation (6), le mélangeur (7) et le deuxième catalyseur RCS (8) forment une unité structurelle.

7. Dispositif selon la revendication 6,
**caractérisé en ce que** l'unité structurelle est un corps cylindrique ayant un diamètre constant.

8. Dispositif selon la revendication 6 ou 7,
**caractérisé en ce que** le catalyseur d'oxydation (5) est formé de segments (5a) à action catalytique et de segments (6a) sans action catalytique.
